# EUROPÄISCHE PATENTSCHRIFT

(11) **EP 0 548 782 B1**
(45) Veröffentlichungstag und Bekanntmachung des Hinweises auf die Patenterteilung: **23.04.1997**
(21) Anmeldenummer: 92121424.3
(22) Anmeldetag: 17.12.1992
(51) Int. Cl.: B23Q 11/00

(54) **Handwerkzeugmaschine mit Staubsack**
Hand tool with a dust bag
Outillage à main avec un sac à poussière

(30) Priorität: 21.12.1991 DE 4142497
(43) Veröffentlichungstag der Anmeldung: 30.06.1993
(73) Patentinhaber: ROBERT BOSCH GMBH, 70442 Stuttgart (DE)
(72) Erfinder: Reibetanz, Wilbert, Dipl.-Ing., W-7022 Leinfelden-Echterdingen (DE); Baumann, Otto, W-7022 Leinfelden-Echterdingen (DE); Müller, Rolf, Dipl.-Ing., W-7022 Leinfelden-Echterdingen (DE); Brost, Wolfgang, W-7022 Leinfelden-Echterdingen (DE); Luick, Holger, W-7022 Leinfelden-Echterdingen (DE); Heckmann, Markus, W-7022 Leinfelden-Echterdingen (DE)

(56) Entgegenhaltungen:
- EP-A- 0 295 225
- CH-A- 221 005
- DE-A- 2 621 631
- US-A- 3 599 273
- US-A- 3 837 383

## Beschreibung

### Stand der Technik

Die Erfindung geht aus von einer Handwerkzeugmaschine nach dem Oberbegriff des Anspruchs 1. Es ist schon eine derartige Handwerkzeugmaschine bekannt (EP-A-295 225), bei der ein Auffangbehälter auf einen Stutzen aufgesteckt ist. Eine separate Staubdichtung zwischen Staubbehälter und Stutzen ist nicht vorgesehen, so daß nach längerem Gebrauch oder unter harten Arbeitsbedingungen das Eindringen von Staub in die ungeschützte Steckverbindung nicht verhindert werden kann. Ein sicherer Halt des Auffangbehälters an der Handwerkzeugmaschine ist dann nicht gewährleistet.

Aus der CH-A-22 1005 ist bereits eine Schlauchkupplung an Staubsaugern bekannt, bei der zwei korrespondierende Stutzen über eine Ringverbindung miteinander verbindbar sind. An den Stirnseiten der Stutzen ist jeweils eine Dichtung vorgesehen, die die Renkverbindung vor Verschmutzung schützt. Da die Staubdichtung jedoch dem Absaugmedium ungeschützt ausgesetzt ist, läßt sich nach längerem Gebrauch und insbesondere nach häufigem Trennen der Schlauchkupplung eine Verschmutzung der Dichtung und damit eine Verringerung der Dichtwirkung nicht vermeiden. Außerdem kann die Dichtung durch aggressive, z.B. Bohrstaub enthaltende Absaugmedien direkt geschädigt werden.

### Vorteile der Erfindung

Die erfindungsgemäße Handwerkzeugmaschine mit den kennzeichnenden Merkmalen des Anspruchs 1 hat demgegenüber den Vorteil, daß sich der Staubsack mit dem Gebläse schnell und sicher verbinden und wieder lösen läßt und daß er in jeder Arbeitslage auch bei starken Erschütterungen dicht abschließend gehalten ist.

Durch die in den abhängigen Ansprüchen aufgeführte Maßnahmen sind vorteilhafte Weiterbildungen und Verbesserungen der im Anspruch 1 angegebenen Handwerkzeugmaschine möglich. Eine schräge Durchbohrung des Stutzens unter einem Winkel von ca. 20° begünstigt das Ableiten des tangential von dem Gebläse abgeschleuderten Materials. Zusätzliche Rastelemente in Form von federnden Rastarmen und zugeordneten Rastmulden sichern die Renkverbindung zusätzlich. Besonders vorteilhaft ist es auch, wenn ggf. mit gesundheitsschädlichen Stoffen gefüllte Staubsack sich mit einem schwer oder gar nicht mehr lösbaren Stopfen verschließen läßt, der im wesentlichen die Konturen des Austrittsstutzens aufweist.

### Zeichnung

Mehrere Ausführungsbeispiele der Erfindung sind in der Zeichnung dargestellt und in der nachfolgenden Beschreibung näher erläutert. Figur 1 zeigt einen Bohrhammer in Ansicht. Figur 2 zeigt einen Teil des Gehäuses mit angeformtem Stutzen, Figur 3 zeigt einen Gegenstutzen mit Filtersack. Die Figuren 4 und 5 sind persektivische Darstellungen von Stutzen und Gegenstutzen. Figur 6 zeigt in einem zweiten Ausführungsbeispiel einen Kombistutzen. Die Figuren 7 bis 9 zeigen Ausführungsbeispiele eines Stopfens für einen Staubsack.

### Beschreibung der Ausführungsbeispiele

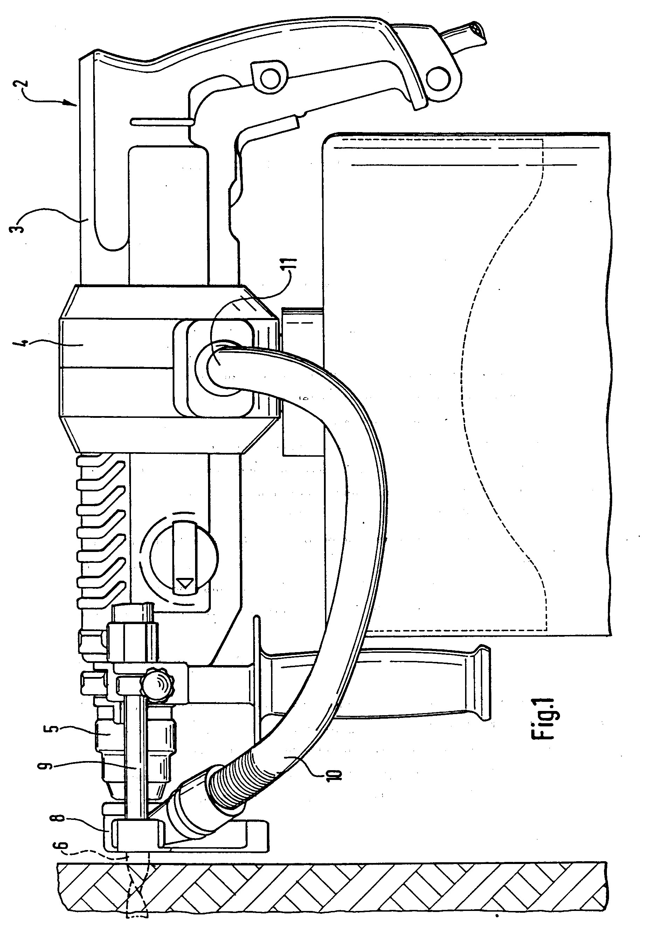

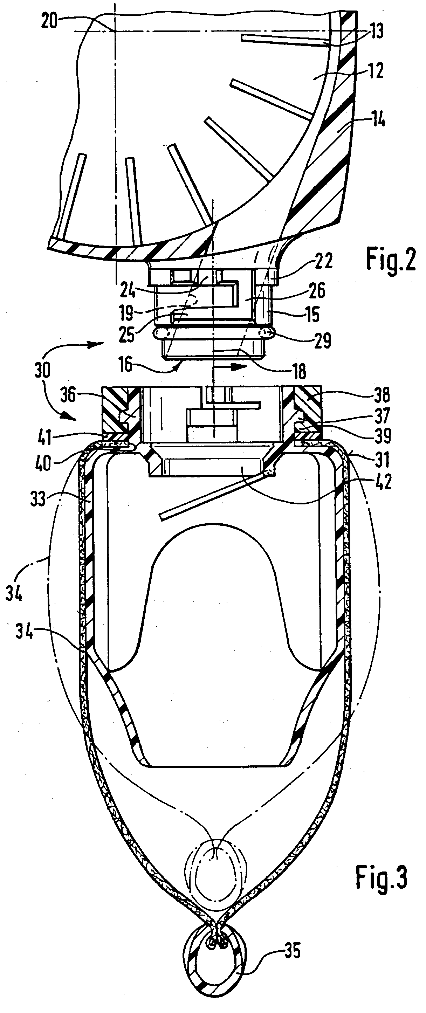

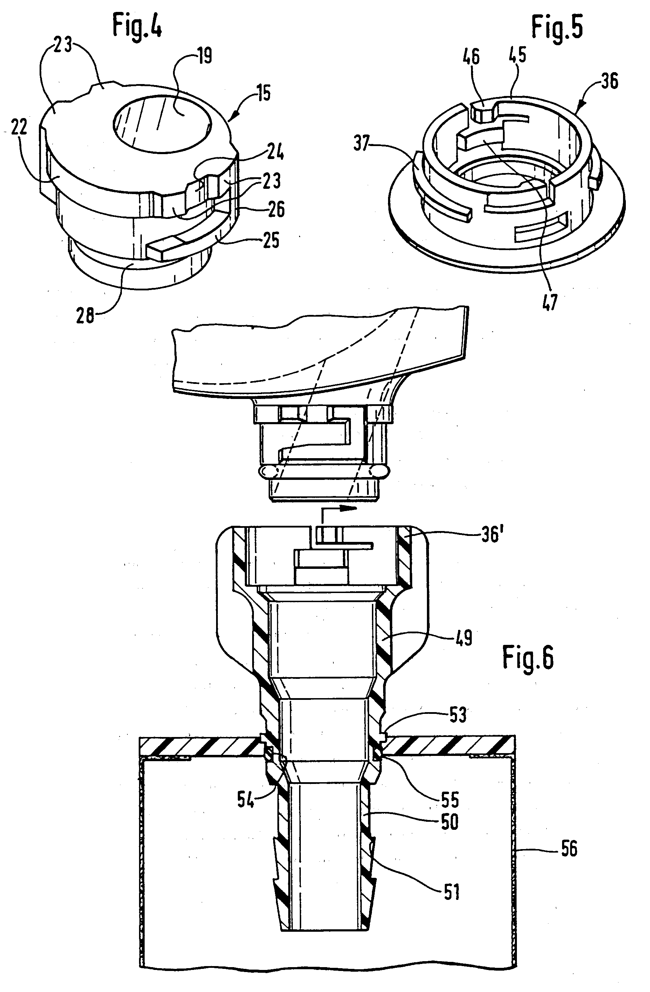

In Figur 1 ist ein Bohrhammer gezeigt, in dessen Gehäuse 3 ein Gebläse 4 integriert ist. Der Bohrhammer 2 weist eine Werkzeugaufnahme 5 auf, in der ein Werkzeug 6 zum Bohren und/oder Schlagen gehalten ist. Mit dem Werkzeug 6 läßt sich beispielsweise das Material einer Wand zur Erzeugung eines Loches abtragen.

Zwischen Werkzeugaufnahme 5 und zu bearbeitender Wand ist eine Saugglocke 8 mittels eines Trägers 9 angebracht. Von der Saugglocke 8 zweigt ein Schlauch 10 ab, der mit einer Ansaugöffnung 11 des Gebläses 4 verbunden ist.

Das Gebläse 4 weist ein in Figur 2 gezeigtes Lüfterrad 12 mit Lüfterschaufeln 13 auf. Der austretende, staubbeladene Luftstrom wird in einem Lüftergehäuse 14 tangential zum Lünfterrad 12 abgeleitet und tritt aus einer mit einem Austrittsstutzen 15 versehenen Austrittsöffnung 16 aus.

Der Stutzen 15 weist eine etwa unter 20° schräg zu seiner Achse 18 ausgerichtete Bohrung 19 auf. Die Bohrung 19 ist tangential auf das Lüfterrad 12 hingerichtet. Die zylindrische Außenseite des Stutzens 15 ist gestuft und im wesentlichen symmetrisch zu seiner Achse 18 sowie senkrecht zur Gehäusemittelachse 20 des Gebläses 4 angeordnet. Der Stutzen 15 weist an seinem Grund einen Bund 22 auf. Auf diesem Bund sind paarweise jeweils zwei Erhebungen 23 angebracht, die zwischen sich eine Rastmulde 24 bilden. In axialem Abstand dazu verlaufen zwei sich in Umfangsrichtung erstreckende Rippen 25. Die Rippen 25 sind an ihrem hinteren Ende über jeweils eine sich in Axialrichtung erstreckende Anschlagrippe 26 mit dem Bund 22 verbunden. Am Übergang zwischen dem dickeren und dem dünneren Teil des Stutzens 15 ist eine Nut 28 angebracht, in der ein O-Ring 29 gehalten ist (vergleiche auch Figur 4).

Der Stutzen 15 bildet einen Teil einer Renkverbindung 30, mit der eine Vorrichtung 31 zum Sammeln oder Ableiten des vom dem Werkzeug 6 abgetragenen Materials verbindbar ist. Als Vorrichtung 31 kommen Staubsäcke mit Gewebe-, Papier- oder Vliesfiltern mit und ohne Stützrahmen oder auch Schläuche zum Ableiten in bereit stehende Staubbehälter in Frage. In Figur 3 ist als erstes Ausführungsbeispiel ein Stützrahmen 33 für Staubsäcke 34 gezeigt. Diese können beispielsweise als Gewebefiltersäcke ausgeführt sein. Der nach unten offene Gewebefiltersack 34 ist mittels eines aufschiebbaren Klemmhalters 35 verschlossen. Wenn die Vorrichtung 31 bei laufendem Gebläse 4 an den Bohrhammer 2 angeschlossen ist, bläht sich der Gewebefiltersack 34 entsprechend der gestrichelt eingezeichneten Linie auf.

Der Stützrahmen 33 kann beliebige Formen aufweisen, ist aber vorzugsweise als bodenloser, flacher kastenförmgier Körper ausgebildet, dessen schmale Seiten etwas länger als die breiten sind. An seine ansonsten geschlossene Oberseite ist ein hohlzylindrischer Gegenstutzen 36 angeformt. Dieser weist außen zwei sich in Umfangsrichtung erstreckende Befestigungsrippen 37 für eine Überwurfmutter 38, die der Befestigung des Gewebefiltersacks 34 dient, auf. Die Überwurfmutter 38 hat nach innen gerichtete Vorsprünge 39, die beim Aufstecken auf den Gegenstutzen 36 seitlich der Befestigungsrippen 37 vorbeigeführt werden und anschließend durch Drehen der Überwurfmutter 38 unter den Befestigungsrippen 37 zu Liegen kommen. Der Gewebefiltersack 34 hat gegenüber seinem offenen Ende ein Loch 40, durch das hindurch der Gegenstutzen 36 gesteckt wird. Zum Schutz des Gewebefiltersacks 34 wird vor dem Aufsetzen der Überwurfmutter 38 ein zum Beispiel aus Metall bestehender Gleitring 41 auf den Gegenstutzen 36 aufgesteckt.

Vom Gegenstutzen 36 aus führt eine Öffnung 42 in dem Stützrahmen 33 ins Innere des Gewebefiltersacks 34. Die Öffnung 42 ist bei Nichtgebrauch der Vorrichtung 31 durch eine Rückschlagklappe 43 verschlossen.

Die Ausbildung des Gegenstutzens 36 ist am besten aus Figur 5 ersichtlich. An seinem äußeren Rand sind zwei sich in Umfangsrichtung erstreckende Rastarme 45 mit nach innen hervorstehenden Rastvorsprüngen 46 an ihren Enden angebracht. Axial innerhalb der Rastvorsprünge 46 trägt der Gegenstutzen 36 zwei gegenüberliegende, nach innen gerichtete Nocken 47.

Bei der Montage der Vorrichtung 31 an den Bohrhammer 2 wird diese axial auf den Stutzen 15 aufgesteckt, so daß die Nocken 47 seitlich an den Rippen 25 vorbeigleiten. Der Bund 22 dient dabei als Axialanschlag für die Nocken 47. Durch Drehen der Vorrichtung 31 nach rechts gelangen die Nocken in den Bereich zwischen die Rippen 25 und die Rastmulden 24, womit die Vorrichtung 31 axial fest an den Bohrhammer 2 gekoppelt ist. Um ein (unbeabsichtigtes) Rückdrehen der Vorrichtung 31 zu verhindern, greifen die Rastarme 45 in die Rastmulden 24 ein. Ein Lösen der Renkverbindung 30 ist durch kräftiges Zurückdrehen der Vorrichtung 31 möglich.

In Figur 6 ist ein zweites Ausführungsbeispiel gezeigt, bei dem die Vorrichtung 31 als Kombistutzen 49 ausgebildet ist. Dieser ist im wesentlichen hohlzylindrisch ausgebildet uund trägt an einem seiner Enden einen Gegenstutzen 36'. Dieser unterscheidet sich von dem Gegenstutzen 36 aus dem ersten Ausführungsbeispiel nur dadurch, daß die äußeren Befestigungsrippen 37 fehlen. Sein entgegengesetztes Anschlußende 50 ist mit einem sägezahnartigen Profil zum Befestigen von Schläuchen ausgestattet.

In dem mittleren Teil zwischen Gegenstutzen 36' und Anschlußende 50 hat der Kombistutzen 49 einen Befestigungsbund 53 und in geringem Abstand dazu eine Ringnut 54, in die ein O-Ring 55 eingelegt ist. Über den O-Ring 55 läßt sich ein Filterelement 56 aus Papier oder Fließ stülpen. Dieses ist zwischen dem Befestigungsbund 53 und dem O-Ring 55 mechanisch fest und staubdicht gehalten.

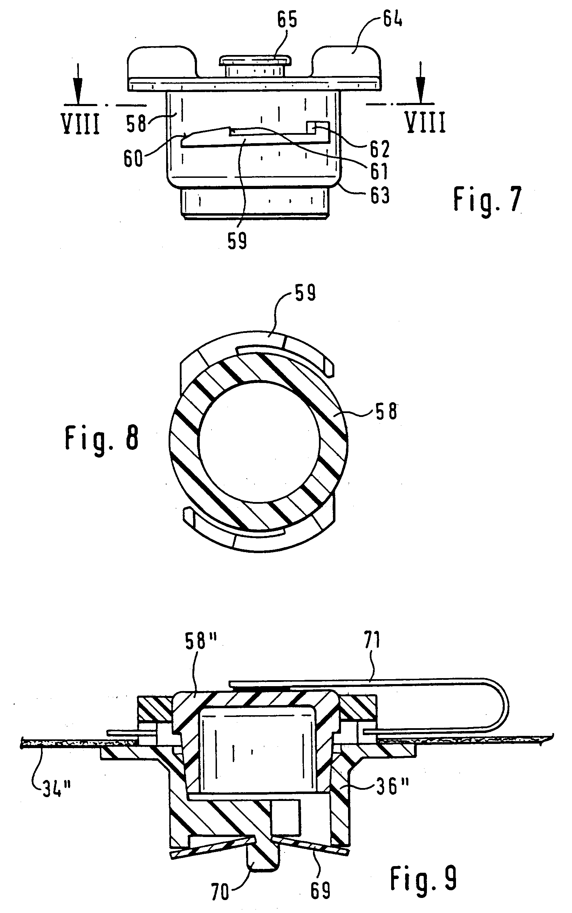

Mit gesundheitsgefährdenden Stäuben gefüllte Staub- oder Filtersäcke 34 müssen nach dem Abnehmen vom Elektrowerkzeug zum Zweck der gefahrlosen Entsorgung mit einem Verschluß dicht und bleibend verschlossen werden können. Diesem Zweck dient ein in den Figuren 7 und 8 (Schnitt gemäß Linie VIII - VIII in Figur 7) gezeigter Stopfen 58 aus umweltverträglichem, insbesondere halogenfreiem Kunststoff. Er entspricht den äußeren Abmessungen des Stutzens 15 und trägt zwei den Rippen 25 entsprechende Gewindesegmente 59. Diese weisen jeweils eine Anlaufschräge 60 und eine Haltekante 61 auf. Am Ende des Gewindesegments ist ein Drehanschlag 62 ausgebildet. Dort, wo an dem Stutzen 15 in Figur 2 ein O-Ring 29 zur Abdichtung eingesetzt ist, befindet sich an dem Stopfen 58 eine abgerundete Dichtkante 63. Zum Eindrehen weist der Stopfen 58 zwei Grifflappen 64 und zum Befestigen mittels einer in Figur 7 nicht gezeigten Befestigungsbrille, Schnur oder dergleichen einen Befestigungspilz 65 auf.

Die federnden Gewindesegmente 59 führen dazu, daß die Dichtkante 63 in gleicher Weise wie der O-Ring 29 des Stutzens 15 an Konusringflächen des Gegenstutzens 36 dichtend angedrückt wird. Das Weglassen eines O-Rings bringt bei dem Stopfen 58 allerdings Kostenvorteile und vereinfacht die Fertigung, weil er fix und fertig aus einem Stück gespritzt werden kann. Die Haltekanten 61 haken sich beim Verschließen hinter die Nocken 47 federnd ein. Dadurch wird ein erneutes Öffnen eines einmal verschlossenen Staubsacks verhindert.

Ein zweites Ausführungsbeispiel eines Stopfens 58'' weist einen Konus 67 auf. Dieser ist gegen die gegenebenfalls ebenfalls leicht konische Innenwand 68 eines Gegenstutzens 36'' anpreßbar und mangels Angriffsflächen an seiner Rückseite nicht wieder entnehmbar. Der Stopfen 58'' ist so ausgebildet, daß er gänzlich in dem Gegenstutzen 36'' verschwindet. Um ein Herausstoßen des Stopfens 58'' vom Inneren des Staubsacks 34'' zu verhindern ist an dem Gegenstutzen 36'' über Stege 69 ein Schutzdom 70 angebracht. Der Stopfen 58'' ist über eine Befestigungsbrille 71 aus einer dünnen Kunststoffolie unverlierbar mit dem Staubsack 34'' verbunden.

## Patentansprüche

1. Handwerkzeugmaschine zur Verwendung mit einem motorisch bewegten materialabtragenden Werkzeug (6), insbesondere Bohrhammer, mit einer Absaugeinrichtung mit einem in das Gehäuse (3) der Handwerkzeugmaschine integrierten Gebläse (4) zum Absaugen des abgetragenen Materials von der Bearbeitungsstelle, das eine Ansaug- und eine Austrittsöffnung (16) aufweist, wobei die Austrittsöffnung (16) von einem Stutzen (15) gebildet wird, an den ein Gegenstutzen (36) einer Vorrichtung (31) zum Sammeln oder Ableiten des abgetragenen Materials lösbar angesetzt ist, wobei Stutzen (15) und Gegenstutzen (36) axial ineinandergreifen, dadurch gekennzeichnet, daß zwischen Stutzen (15) und Gegenstutzen (36) eine Renkverbindung (30) vorgesehen ist, die durch eine Staubdichtung (29) vor Verschmutzung geschützt ist, welche vom Inneren der Vorrichtung (31) gesehen hinter der Austrittsöffnung (16) und vor der Renkverbindung (30) angeordnet ist.

2. Handwerkzeugmaschine nach Anspruch 1, dadurch gekennzeichnet, daß die Staubdichtung (29) als O-ring ausgebildet ist.

3. Handwerkzeugmaschine nach einem der Ansprüche 1 bis 2, dadurch gekennzeichnet, daß der Stutzen (15) senkrecht Zur Gehäusemittelachse (20) des Gebläses (4) angeordnet ist.

4. Handwerkzeugmaschine nach einem der Ansprüche 1 bis 3, dadurch gekennzeichnet, daß der Stutzen (15) relativ zu seiner Mittelachse schräg, insbesondere unter einem Winkel von ca. 20°, durchbohrt ist.

5. Handwerkzeugmaschine nach einem der Ansprüche 1 bis 4, dadurch gekennzeichnet, daß die Renkverbindung (30) Rastelemente in Form von federnden Rastarmen (45) und zugeordneten Rastmulden (24) aufweist.

6. Handwerkzeugmaschine nach einem der vorhergehenden Ansprüche, dadurch gekennzeichnet, daß der Gegenstutzen (36) eine Rückschlagklappe (43) aufweist.

7. Handwerkzeugmaschine nach einem der vorhergehenden Ansprüche, dadurch gekennzeichnet, daß die mit dem Stutzen (15) zu verbindende Vorrichtung (31) ein Filtersack (34) ist, in den der Gegenstutzen (36) einmündet.

8. Handwerkzeugmaschine nach einem der vorhergehenden Ansprüche 1 bis 6, dadurch gekennzeichnet, daß die mit dem Stutzen (15) zu verbindende Vorrichtung (31) ein Kombistutzen (49) zum Anschluß eines Schlauches oder eines Filterelementes (56) ist.

## Claims

1. Powered hand tool for use with a motor-operated, material-removing tool (6), in particular a hammer drill, having an extraction device with a fan (4) for extracting the removed material from the working point, which fan (4) is integrated in the housing (3) of the powered hand tool and has an intake opening and a discharge opening (16), the discharge opening (16) being formed by a connection piece (15) to which a mating connection piece (36) of a device (31) for collecting or carrying off the removed material is releasably attached, the connection piece (15) and mating connection piece (36) axially interlocking, characterized in that a bayonet connection (30) is provided between connection piece (15) and mating connection piece (36), which bayonet connection (30) is protected from contamination by a dust seal (29) which, as viewed from the interior of the device (31), is arranged behind the discharge opening (16) and in front of the bayonet connection (30).

2. Powered hand tool according to Claim 1, characterized in that the dust seal (29) is designed as an O-ring.

3. Powered hand tool according to either of Claims 1 or 2, characterized in that the connection piece (15) is arranged perpendicularly to the housing centre axis (20) of the fan (4).

4. Powered hand tool according to one of Claims 1 to 3, characterized in that the connection piece (15) is bored through obliquely in relation to its centre axis, in particular at an angle of about 20°.

5. Powered hand tool according to one of Claims 1 to 4, characterized in that the bayonet connection (30) has catch elements in the form of flexible catch arms (45) and allocated catch hollows (24).

6. Powered hand tool according to one of the preceding claims, characterized in that the mating connection piece (36) has a non-return valve (43).

7. Powered hand tool according to one of the preceding claims, characterized in that the device (31) to be connected to the connection piece (15) is a filter bag (34) into which the mating connection piece (36) leads.

8. Powered hand tool according to one of the preceding Claims 1 to 6, characterized in that the device (31) to be connected to the connection piece (15) is a combination connection piece (49) for connecting a hose or a filter element (56).

## Revendications

1. Machine outil à main pour utilisation avec un outil (6), entraîné par un moteur, qui enlève de la matière en particulier une perceuse à percussion, avec un dispositif d'aspiration avec une soufflante (4) intégrée dans le carter (3) de la machine outil à main pour aspirer les matières enlevées de l'endroit du travail, soufflante qui présente un orifice d'aspiration et de sortie (16), l'orifice de sortie (16) étant constitué par un ajutage (15), auquel est accroché de façon amovible un ajutage réciproque (36) d'un dispositif (31), qui sert à collecter ou évacuer les matières enlevées, l'ajutage (15) et l'ajutage réciproque (36) venant en prise axialement l'un dans l'autre,
caractérisé en ce que
l'on prévoit entre l'ajutage (15) et l'ajutage réciproque (36) une liaison à baïonnette (30), qui est protégée par un joint d'étanchéité (29) contre l'empoussièrement, joint qui est disposé, vu de l'intérieur du dispositif (31), derrière l'ouverture d'entrée (16) et devant la liaison à baïonnette (30).

2. Machine outil à main selon la revendication 1,
caractérisée en ce que
le joint d'étanchéité contre la poussière (29) est constitué sous la forme d'un joint torique.

3. Machine outil à main selon la revendication 1 à 2,
caractérisée en ce que
l'ajutage (15) est disposé perpendiculairement à l'axe central du carter (20) de la soufflante (4).

4. Machine outil à main selon la revendication 1 à 3,
caractérisée en ce que
l'ajutage (15) est percé obliquement par rapport à son axe central, en particulier sous un angle d'environ 20°.

5. Machine outil à main selon la revendication 1 à 4,
caractérisée en ce que
la liaison à baïonnette (30) présente des éléments d'encliquetage sous la forme de bras d'encliquetage élastiques (45) et d'alvéoles d'encliquetage correspondantes (24).

6. Machine outil à main selon l'une des revendications précédentes,
caractérisée en ce que
l'ajutage réciproque (36) présente un clapet anti-retour (43).

7. Machine outil à main selon l'une des revendications précédentes,
caractérisée en ce que
le dispositif (31), à relier à l'ajutage (15), est un sac filtrant (34) dans lequel débouche l'ajutage réciproque (36).

8. Machine outil à main selon l'une des revendications précédentes 1 à 6,
caractérisée en ce que
le dispositif (31), à relier à l'ajutage (15), est un ajutage combiné (49), qui sert au raccordement d'un tuyau ou d'un élément filtrant (56).
